# FASCICULE DE BREVET EUROPEEN

(11) **EP 2 332 809 B1**
(45) Date de publication et mention de la délivrance du brevet: **12.09.2012**
(21) Numéro de dépôt: 10305993.7
(22) Date de dépôt: 17.09.2010
(51) Int. Cl.: B62D 21/15, B62D 25/14, B62D 27/02, B62D 29/04

(54) **Traverse inférieure de baie en matériau composite**
Unterer Windschutzscheiben-Querträger aus Verbundmaterial
Lower windscreen cross-member made from composite material

(30) Priorité: 14.12.2009 FR 0958935
(43) Date de publication de la demande: 15.06.2011
(73) Titulaire: Renault S.A.S., 92100 Boulogne-Billancourt (FR)
(72) Inventeur: Bannier, Nathalie, 78860 Saint Nom la Breteche (FR); De Carvalho, Sergio, 35150 Janze (FR)

(56) Documents cités:
- EP-A1- 2 105 375
- DE-A1- 19 633 162
- FR-A1- 2 874 577
- US-A- 5 924 764

## Description

L'invention concerne une traverse inférieure de baie en matériau composite pour un véhicule automobile, composée d'une partie supérieure et d'une partie inférieure assemblée l'une à l'autre par collage, ladite traverse comportant deux extrémités et un insert métallique assemblé par collage à chacune des extrémités, la partie inférieure de la traverse inférieure de baie surmontant une traverse supérieure de tablier à laquelle elle est assemblée par collage.

On connait déjà (FR 2 874 577) des traverses inférieures de baie de ce type. Toutefois, ces traverses présentent un certain nombre d'inconvénients. Lors d'un essai au choc il a été constaté une rupture de la liaison entre la traverse inférieure de baie et les inserts métalliques latéraux. Cette rupture a joué un rôle actif dans la ruine du pied avant constaté et le déboutonnage de points de soudure par résistance. Cet échappement est dû au recul de coupelle de l'ordre de 100 mm lors de ce type de ce choc. D'autre part, il a été constaté un certain nombre de fissures et la possibilité du passage de l'air entre le compartiment moteur et l'habitacle. Le principal problème rencontré dans le comportement en choc de la traverse inférieure de baie a pour source la non tenue de la liaison latérale. En effet, cette liaison entre la doublure de pieds, l'insert et la traverse inférieure de baie doit être préservée pour le rôle qu'elle joue de la non déformation du cadre de porte.

La présente invention a pour objet une traverse inférieure de baie qui remédie à ces inconvénients et qui, notamment, améliore la liaison entre la traverse inférieure de baie et la doublure de pieds.

Ces buts sont atteints, conformément à la présente invention par le fait que la traverse inférieure de baie comporte des zones déformables, situées en regard des zones de déformation de la traverse supérieure de tablier, pour suivre la déformation de la traverse supérieure de tablier.

De préférence, les zones déformables de la traverse inférieure de tablier sont des zones plissées en accordéon. Grâce à ces caractéristiques, la déformation de la traverse inférieure de baie suit la déformation de la traverse supérieure de tablier et on évite l'apparition de fissures entre le compartiment moteur et l'habitacle.

De préférence, la traverse inférieure de baie comporte des nervures uniquement sur sa partie supérieure.

Avantageusement, l'épaisseur du matériau composite est réduite à 1 mm aux deux extrémités de la traverse inférieure de baie, en arrière des coupelles d'amortisseur et entre deux cordons de colle d'un élément de fermeture de la traverse supérieure de tablier.

Avantageusement encore la traverse inférieure de baie comporte des inserts de liaison en forme d'équerre entre la traverse inférieure de baie et la doublure de pieds bloquant la carre supérieure des deux parties de la traverse inférieure de baie.

D'autres caractéristiques et avantages de la présente invention apparaitront encore à la lecture de la description qui suit d'un exemple de réalisation donné à titre illustratif en référence aux figures annexées. Sur ces figures :
- la figure 1 représente la partie supérieure et la partie inférieure de la traverse inférieure de baie espacée l'une de l'autre ;
- la figure 2 représente la partie supérieure et la partie inférieure de la traverse inférieure de baie assemblée l'une à l'autre ;
- la figure 3 est une vue en perspective de la partie inférieure de la traverse inférieure de baie comportant des zones de déformation pour le suivi de la déformation de la traverse supérieure de tablier ;
- la figure 4 est une vue en perspective d'un insert ;
- la figure 5 est une représentation schématique d'une première forme de réalisation de la section de la traverse inférieure de baie ;
- la figure 6 est une représentation schématique d'une seconde forme de réalisation de la section de la traverse inférieure de baie ;
- la figure 7 est une vue de dessous de la traverse inférieure de baie montrant deux cordons de colle ;
- la figure 8 est une vue en perspective montrant la traverse inférieure de baie dans la position qu'elle occupe dans le châssis du véhicule automobile.

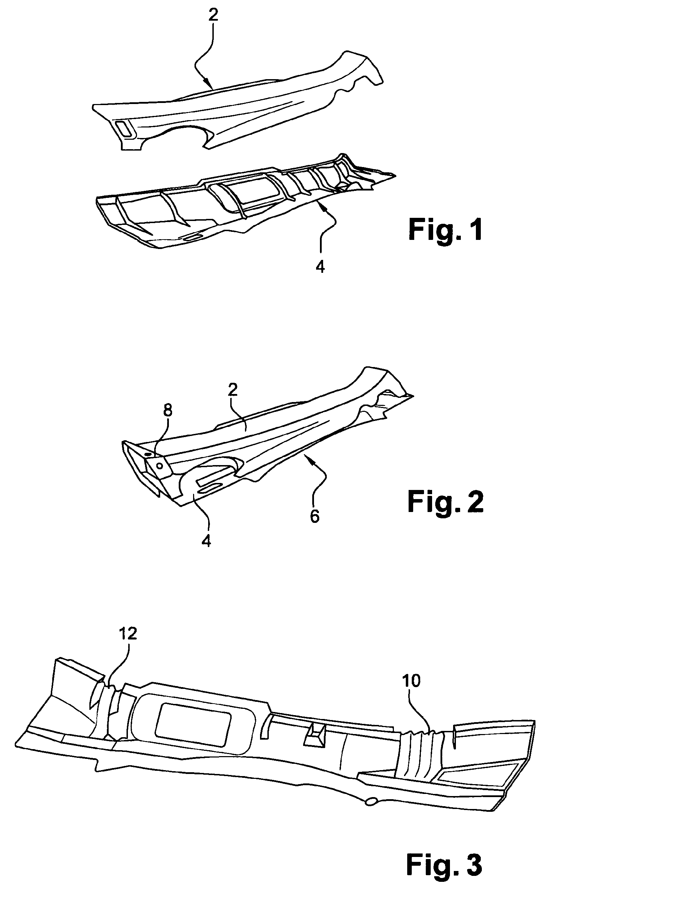

On a représenté sur la figure 1 une vue de la partie supérieure 2 de la traverse inférieure de baie et une vue de la partie inférieure 4 de la traverse inférieure de baie espacée l'une de l'autre dans la position qu'elles occupent avant assemblage. On a représenté sur la figure 2 la partie supérieure 2 et la partie inférieure 4 de la traverse inférieure de baie assemblée l'une à l'autre par collage.

La traverse inférieure assemblée comporte des pattes métalliques 8 collées à la traverse inférieure de baie et rivetées.

La traverse inférieure de baie 6 comporte des nervures de renfort disposées dans le volume intérieur défini par les parties supérieure 2 et inférieure 4. Les parties 2 et 4 ainsi que les nervures de renforcement sont réalisées en matière plastique éventuellement renforcées de fibres de verre. A titre d'exemple non limitatif, ils peuvent être en un matériau plastique thermodurcissable ou en une matière plastique thermoplastique, par exemple l'AMC (résine thermodurcissable à base de polyester renforcé de fibre de verres) ou le PA66 GF30 (résine thermoplastique à base de polyamide renforcé de 30% de fibre de verre). Les nervures sont intégrées soit à la partie supérieure soit à la partie inférieure de la traverse inférieure de baie. Dans une réalisation préférée la traverse inférieure de baie comporte des nervures uniquement sur sa partie supérieure 2.

On a représenté sur la figure 3 une vue en perspective de la partie inférieure 4 de la traverse inférieure de baie comportant des zones de déformation 10,12 pour le suivi de la déformation de la traverse supérieure de tablier. Dans un exemple de réalisation non limitatif, les zones déformables de la traverse inférieure de baie sont des zones plissées en accordéon au droit des zones de déformation de la traverse supérieure de tablier. Les dimensions de ces zones en accordéon sont par exemple 14 mm x 20 mm. 14 mm correspond à la demi-largeur d'une vague et 20 mm correspond à sa profondeur. Ces valeurs ne sont données qu'à titre d'exemple. Le nombre de vagues et leur localisation ne sont donnés qu'à titre d'exemple. Ils dépendront de la forme générale de la traverse inférieure de baie et de sa déformation en choc.

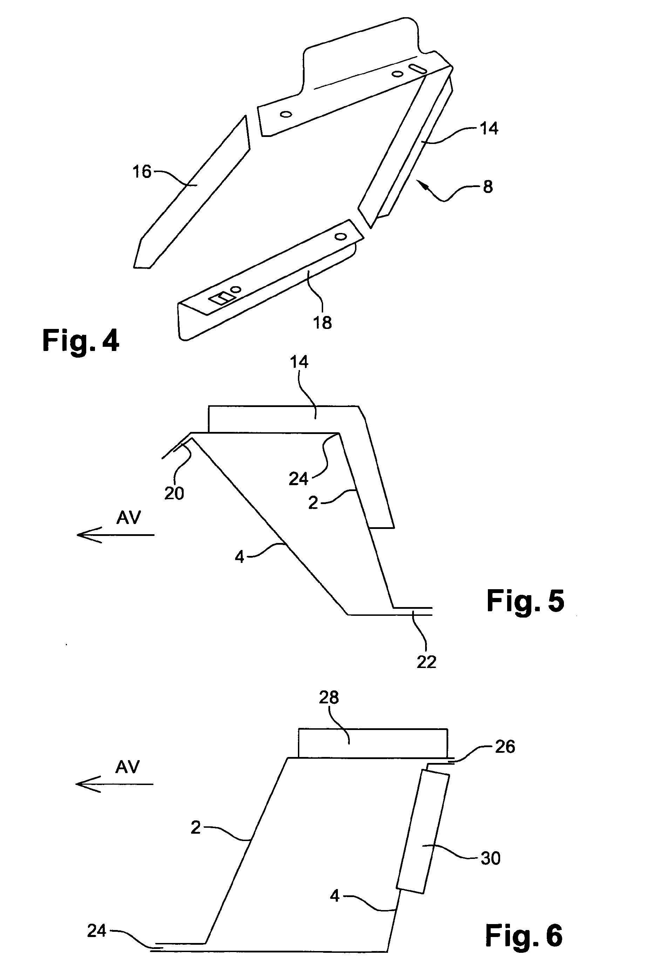

On a représenté sur la figure 4 une vue de détail des inserts métalliques logés aux deux extrémités de la traverse inférieure de baie. Comme on peut le voir l'insert métallique 8 se compose de trois parties à savoir une partie en forme d'équerre 14 et de deux parties rectilignes 16 et 18. Les parties 14, 16 et 18 sont assemblées par collage et par rivetage aux extrémités de la traverse inférieure de baie.

On a représenté sur la figure 5 une vue en coupe d'un premier découpage de la section de la traverse inférieure de baie. Dans ce découpage la liaison entre la partie supérieure 2 et la partie inférieure 4 de la traverse inférieure de baie 20 se trouve en haut et à gauche de la section inférieure de baie, l'avant du véhicule se trouvant vers la gauche comme schématisée par la flèche. Une liaison de la partie supérieure 2 de la traverse inférieure de baie et de la partie 4 se trouve en 22 à la partie inférieure droite, selon la figure, de la section de la traverse inférieure de baie. Dans cette réalisation l'insert 14 est fermé au niveau de la carre supérieure 24. En d'autre termes l'insert 14 présente une forme en équerre qui épouse la forme de la partie supérieure 2 de la traverse inférieure de baie.

On a représenté sur la figure 6 une variante de réalisation de la section de la traverse inférieure de baie. La partie supérieure 2 et la partie inférieure 4 se raccordent en 24 à la partie avant et inférieure de la section de la traverse inférieure de baie. A leur autre extrémité, la partie supérieure 2 et la partie inférieure 4 se raccordent en 26, à la partie supérieure droite de la traverse inférieure de baie. Comme dans le cas de la figure 5, l'avant du véhicule se trouve sur la partie gauche de la figure, comme schématisé par la flèche. On constate que dans ce mode de réalisation les inserts 28 et 30 ne sont pas fermés au niveau de la carre 26. En conséquence les parties supérieures 2 et inférieure 4 de la traverse inférieure de baie sont moins bien maintenues que dans le cas du découpage de la figure 5. C'est pourquoi, selon l'invention, on privilégie le découpage de la figure 5 à celui de la figure 6 entre traverse inférieure de baie partie inférieure et partie supérieure. Si cela ne s'avère pas possible, on utilise des inserts de liaison entre traverses inférieures de baie et doublures de pieds en forme d'équerre.

Il peut être impossible de privilégier le découpage de la figure 5 par rapport à celui de la figure 6 parce que le découpage risque d'être induit par des contraintes de faisabilités de la pièce plastique, d'architecture du véhicule dans la zone ou de conception.

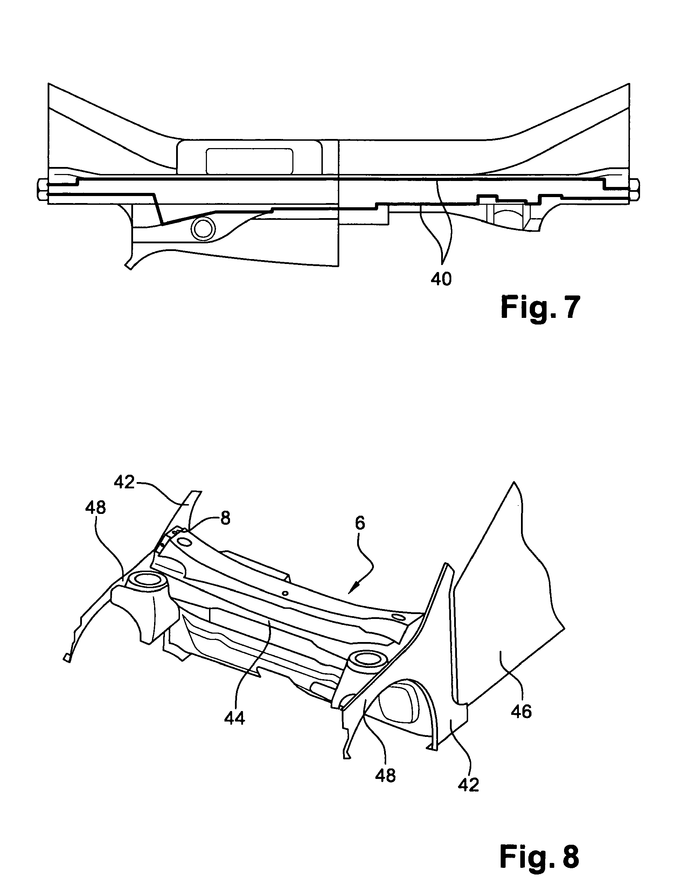

On a représenté sur la figure 7 une vue de dessous de la traverse inférieure de baie. Sur cette figure on peut apprécier les deux lignes de colle 40 qui permettent la fixation de la traverse inférieure de baie sur la traverse supérieure de tablier.

On a représenté sur la figure 8 une vue en perspective de la partie avant d'un véhicule automobile comportant une traverse inférieure de baie 6. La traverse inférieure de baie est fixée à ses deux extrémités aux doublures de pieds avant 42 du véhicule. Les inserts 8 sont les pièces de liaison entre la traverse inférieure de baie 6 en plastique et le reste de la caisse en métal. L'insert est lié du côté de la traverse inférieure de baie par des cordons de colle et du côté de la doublure de pieds 42 par des points de soudure. La désolidarisation de la traverse inférieure de baie du reste de la caisse du véhicule se produit donc soit par rupture de la colle soit par rupture des points de soudure.

On a désigné par la référence 44 la traverse supérieure de tablier à laquelle la traverse inférieure de baie 6 est liée par deux cordons de colle, comme représenté sur la figure 7. On a désigné par la référence 46, la porte avant du véhicule.

Conformément à une autre caractéristique de l'invention on diminue l'épaisseur du matériau composite à 1 mm à l'arrière des coupelles 48 des amortisseurs de roue avant du véhicule et entre les deux cordons de colle de l'élément de fermeture de la traverse supérieure de tablier.

## Revendications

1. Traverse inférieure de baie en matériau composite pour un véhicule automobile, composée d'une partie supérieure (2) et d'une partie inférieure (4) assemblées l'une à l'autre par collage, ladite traverse (6) comportant deux extrémités et un insert métallique (8) assemblé par collage à chacune des extrémités, la partie inférieure (4) de la traverse inférieure de baie surmontant une traverse supérieure de tablier (44) à laquelle elle est assemblée par collage, **caractérisé en ce qu'**elle comporte des zones déformables (10,12) situées en regard des zones de déformation de la traverse supérieure de tablier (44) pour suivre la déformation de la traverse supérieure de tablier.

2. Traverse inférieure de baie selon la revendication 1, **caractérisée en ce que** les zones déformables (10,12) de la traverse inférieure de baie sont des zones plissées en accordéon.

3. Traverse inférieure de baie selon la revendication 1 ou la revendication 2, **caractérisée en ce qu'**elle comporte des nervures uniquement sur sa partie supérieure.

4. Traverse inférieure de baie selon l'une quelconque des revendications 1 à 3, **caractérisée en ce que** l'épaisseur du matériau composite est réduite à 1 mm aux deux extrémités de la traverse inférieure de baie (6) en arrière des coupelles (48) d'amortisseur et entre deux cordons de colle (40) d'un élément de fermeture de la traverse supérieure de tablier.

5. Traverse inférieure de baie selon l'une quelconque des revendications 1 à 4, **caractérisée en ce qu'**elle comporte des inserts de liaison en forme d'équerre (14) entre la traverse inférieure de baie et la doublure de pieds bloquant la carre supérieure des deux parties de la traverse inférieure de baie.

## Claims

1. Lower windscreen crossmember made of composite material for a motor vehicle, which crossmember is made up of an upper part (2) and of a lower part (4) joined together by bonding, said crossmember (6) comprising two ends and a metal insert (8) assembled by bonding to each of the ends, the lower part (4) of the lower windscreen crossmember surmounting an upper bulkhead crossmember (44) to which it is assembled by bonding, **characterized in that** it comprises deformable regions (10, 12) situated facing regions of deformation of the upper bulkhead crossmember (44) in order to follow the deformation of the upper bulkhead crossmember.

2. Lower windscreen crossmember according to Claim 1, **characterized in that** the deformable regions (10, 12) of the lower windscreen crossmember are concertinafolded regions.

3. Lower windscreen crossmember according to Claim 1 or Claim 2, **characterized in that** it comprises ribs only on its upper part.

4. Lower windscreen crossmember according to any one of Claims 1 to 3, **characterized in that** the thickness of the composite material is reduced down to 1 mm at the two ends of the lower windscreen crossmember (6) behind the shock absorber spring cups (48) and between two beads of adhesive (40) of an element for closing of the upper bulkhead crossmember.

5. Lower windscreen crossmember according to any one of Claims 1 to 4, **characterized in that** it comprises bracket-shaped connecting inserts (14) for connection between the lower windscreen crossmember and the pillar lining blocking the upper edge of the two parts of the lower windscreen crossmember.

## Patentansprüche

1. Unterer Rahmenquerträger aus Verbundmaterial für ein Kraftfahrzeug, der aus einem oberen Teil (2) und aus einem unteren Teil (4) besteht, die durch Kleben zusammengefügt werden, wobei der Querträger (6) zwei Enden und einen metallischen Einsatz (8) aufweist, der durch Kleben an jedem der Enden angefügt wird, wobei der untere Teil (4) des unteren Rahmenquerträgers über einem oberen Stirnwandquerträger (44) sitzt, an dem er durch Kleben befestigt ist, **dadurch gekennzeichnet, dass** er verformbare Zonen (10, 12) aufweist, die sich gegenüber den Verformungszonen des oberen Stirnwandquerträgers (44) befinden, um der Verformung des oberen Stirnwandquerträgers zu folgen.

2. Unterer Rahmenquerträger nach Anspruch 1, **dadurch gekennzeichnet, dass** die verformbaren Zonen (10, 12) des unteren Rahmenquerträgers harmonikagefaltete Zonen sind.

3. Unterer Rahmenquerträger nach Anspruch 1 oder Anspruch 2, **dadurch gekennzeichnet, dass** er nur auf seinem oberen Teil Rippen aufweist.

4. Unterer Rahmenquerträger nach einem der Ansprüche 1 bis 3, **dadurch gekennzeichnet, dass** die Dicke des Verbundmaterials an den zwei Enden des unteren Rahmenquerträgers (6) hinter den Dämpfermembranen (48) und zwischen zwei Klebstoffwülsten (40) eines Schließelements des oberen Stirnwandquerträgers auf 1 mm reduziert ist.

5. Unterer Rahmenquerträger nach einem der Ansprüche 1 bis 4, **dadurch gekennzeichnet, dass** er Verbindungseinsätze in Form eines Winkels (14) zwischen dem unteren Rahmenquerträger und dem Säulen-Innenblech hat, die die obere Leistenkante der zwei Teile des unteren Rahmenquerträgers blockieren.
